# EUROPEAN PATENT APPLICATION

(11) **EP 2 509 266 A1**
(43) Date of publication of application: **10.10.2012**
(21) Application number: 11305394.6
(22) Date of filing: 05.04.2011
(51) Int. Cl.: H04L 12/56, G06F 17/30, G06F 17/50, H04L 12/24

(54) **Method of pooling resources of a computer network**

(71) Applicant: Alcatel Lucent, 75007 Paris (FR)
(72) Inventor: Grob-Lipski, Heidrun, 72181, Starzach (DE); Roessler, Horst, 70794, Filderstadt (DE)
(74) Representative: Wetzel, Emmanuelle

(57) **Abstract**

Method of pooling resources of a computer network, wherein each node of the computer network is represented by a vertex of a weighted graph, the method comprising the steps of identifying a plurality of paths from a start vertex to an end vertex, finding a longest common subpath from the start vertex to a split vertex, finding a plurality of independent subpaths from the split vertex to a join vertex, and concatenating the edges traversed by the longest common subpath and each of the independent subpaths.

## Description

### Field of the Invention

The invention relates to a method of pooling resources of a computer network.

### Background

This section introduces aspects that may be helpful in facilitating a better understanding of the invention. Accordingly, the statements of this section are to be read in this light and are not to be understood as admissions about what is in the prior art or what is not in the prior art.

In media technology, teletraffic engineering is the application of traffic engineering theory to telecommunications. Teletraffic engineers use their basic knowledge of statistics including queuing theory, the nature of traffic, their practical models, their measurements and simulations to make predictions and to plan telecommunication networks such as the telephone network or the Internet. Teletraffic engineering methods aim to provide reliable service at lower cost.

As demands on the Internet grow, network operators specifically make use of teletraffic engineering to balance load and improve resilience against failures. These endeavors are reinforced by the challenges of managing wide-area traffic patterns, such as occur in peer-to-peer applications or globally distributed server farms.

To this end, within the field of teletraffic engineering, an architectural principle has emerged that is commonly referred to as resource pooling. In this context, Resource pooling means making a collection of networked resources behave as though they make up a single pooled resource. The general method of resource pooling is to build mechanisms for shifting load between various parts of the network. In many networks, resource pooling is often the only practical way to achieve resilience at acceptable cost. As such, resource pooling is a cost-effective way to achieve flexibility and high utilization.

A conventional resource pooling mechanism can be found in content delivery networks. By content delivery network or content distribution network (CDN) is meant a system of computers containing copies of data, placed at various points in a network so as to maximize bandwidth for access to the data from clients throughout the network. A client accesses a nearby copy of the data, as opposed to all clients accessing the same central server, so as to avoid bottlenecks near that server. In doing so, the CDN effectively pools the CPU cycles, bandwidth and reliability of the servers employed. If a hot spot develops, traffic can be moved to less overloaded servers or network links. If a server dies, it is just dropped from the pool. This mechanism enables CDNs to move large amounts of traffic from one part of the Internet to another, independently of any traffic engineering performed by upstream Internet service providers (ISPs).

A downside of state-of-the-art resource pooling mechanisms such as implemented in CDNs lies in their lack of support for heterogeneous resources. As a consequence, conflicts may occur where network components take incompatible approaches to resource pooling.

### Summary

The present invention was made in view of the prior art described above, and the object of some embodiments is to provide a practical method capable of pooling resources of a computer network.

According to an embodiment there is provided a method of pooling resources of a computer network and finding a representation of the "weight" of the resource pool in form of different metrics, wherein each node of the computer network is represented by a vertex of a weighted graph, the method comprising the steps of identifying a plurality of paths from a start vertex to an end vertex, finding a longest common subpath from the start vertex to a split vertex, finding a plurality of independent subpaths from the split vertex to a join vertex, and concatenating the edges traversed by the longest common subpath and each of the independent subpaths.

### Brief Description of the Figures

Some embodiments of apparatus and/or methods in accordance with embodiments of the present invention are now described, by way of example only, and with reference to the accompanying drawings, in which:
Figure 1 schematically illustrates a network example with end user nodes X and Y and capacity values at the edges (links).
Figure 2 schematically illustrates the network example with end user nodes X and Y after reaching the joint hops D and E.
Figure 3 schematically illustrates the network example with end user nodes X and Y after concatenation and aggregation at the joint hops D and E.
Figure 4 schematically illustrates the final resource pool result of the network example.

### Description of the Embodiments

Hereinafter, the best mode for carrying out a method according to an embodiment is described in detail.

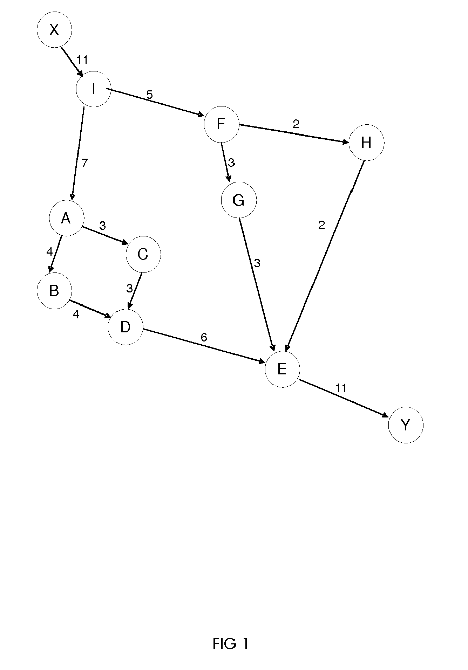

The basic idea is to define an efficient algorithm that identifies a generic resource pool constituted by a set of paths between two end points (e.g. node X and Y in example Figure 1).

The resource pool can be based on the resource pool(s) from different components to achieve best possible effectiveness and to avoid conflicts with each other. Based on this the resources are identified and selected for resource pooling and aggregated and concatenated on lower layers.

The method defines an algorithm, which aggregates, concatenates and abstracts a set of paths (resource pool). The set of paths can be a result of specific routing or path calculation algorithms.

Additionally, the algorithm does not only generate aggregated, concatenated and/or abstracted capacity, but also delay, packet loss and even energy metrics etc. This is supported from network resource ontologies (docket 806410) and enables the representation of metrics of heterogeneous physical resources at each network layer/level.

The resource pooling has been defined to support cross-layer advertisement of aggregated/concatenated and abstracted metric values (docket 805545). This abstract resource information is available at each network level/layer especially to support resource allocation.

As the algorithm should only be performed during design time or on the management plane, the complexity and performance should not be a topic in this case.

The resource pool comprises either
- the total resources of the whole network or network domain or
- a pre-defined subset of resources of the network or network domain, which is defined from
   o the resource pool(s) of an existing mechanism (e.g. routing mechanism)
   o the cut set of the resource pools of several mechanisms or
   o the set union of the resource pools of several mechanisms

For example, multipath transport mechanisms can deliver the resource pooling. It is possible to achieve resource pooling using the routing system if routers can make a choice of more than one path for traffic forwarding to a destination.

In order to define the resources for the generic resource pool, the algorithm
1. identifies either all possible disjunctive or partially disjunctive paths or a subset of all possible disjunctive or partially disjunctives paths between two end user nodes, e.g. selected from an existing routing mechanism, starting at hop = X with hopCount = 1.
2. The algorithm searches for a (first) cycle for each path by traversing the nodes along the (partially) disjunctive paths until the path joins at a joint hop. As soon as the cycle reaches a joint hop
   a. the algorithm first performs resource concatenation of the edges along the path either starting at the split hop forward to the joint hop or backward starting from the joint hop until the split hop.
   b. the algorithm the performs aggregation of the disjunctive and concatenated edges (links).
3. If the algorithm
   a. has reached the end point (hop = Y), the iteration stops.
   b. has not yet reached the end point (hop Y), the number of hopCount is increased by one and the algorithm continues at 2.

The ResourceObjects get immediate information about current link characteristics, e. g. link degradation etc.

Figure 1 shows an exemplary network with the end user node X and the end node Y. The nodes of the core network consist of the nodes A, B, C, D, E, F, G, H and I. In this case the resources of the core network represent the nodes of the resource pool for communication between the end user nodes X and Y. The numbers at the edges represent the link capacities.

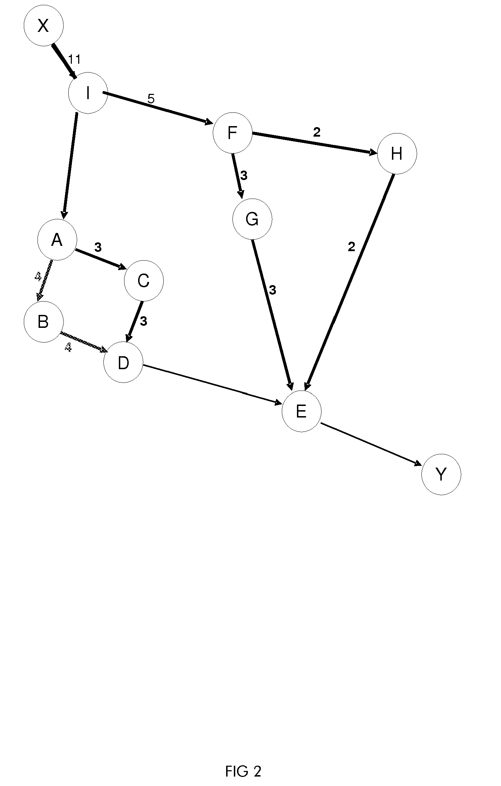

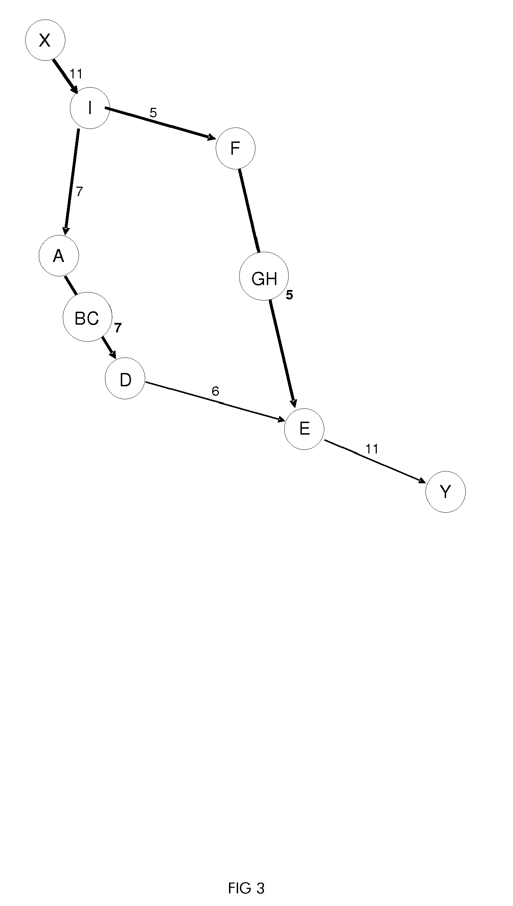

In this scenario, an algorithm according to an embodiment of the invention may perform the following steps:
1. Identify the disjunctive or partially disjunctive paths between end user node X and end user node Y for the resource pool. Based on the example of Figure 1 the mechanism identifies the complete set of all possible disjunctive or partially disjunctive paths between X and Y:
   a. X → I → F → H → E → Y
   b. X → I → F → G → E → Y
   c. X → I → A → B → D → E → Y
   d. X → I → A → C → D → E → Y
2. The algorithm searches for a (first) cycle for each path by traversing the nodes along the (partially) disjunctive paths in parallel until the path joins at a joint hop E respectively D in Figure 2. In the example the (partially) disjunctive paths are
   a. X → I → F → H → E
   b. X → I → F → G → E
   c. X → I → A → B → D
   d. X → I → A → C → D
   In the example the concatenations of the edges, starting at node X until the joint hops D respectively E, corresponds to identifying the minimum capacity value of the edges along the disjunctive or partially disjunctive paths:
   a. 2
   b. 3
   c. 4
   d. 3
   Additionally, aggregation of resources is performed, as the (partially) disjunctive paths a. and b. assemble at the joint hop E and the (partially) disjunctive paths c. and d. assemble at the joint hop D.
   e. X → I → F → GH → E
   f. X → I → A → BC → D
   In this example, aggregation corresponds to the sum of the minimum capacity values of the paths a. and b. respectively c. and d.:
   e. 5
   f. 7
3. In the next step the algorithm traverses one more node on the path f. (Figure 3) until the passage ends in node E, which is a joint hop of both paths:
   e. X → I → F → GH → E
   f. X → I → A → BC → D → E
   The concatenation and aggregation is performed as the (partially) disjunctive paths e. and f. meet at the same node E.
   In this example, concatenation (minimum capacity values along the paths e. and f.) results to the following capacity values:
   e. 5
   f. 6
   Aggregation (sum of the capacity values) of the paths e. and f. results in the following path and its capacity value 11:
   g. X → I → AFBCDGH → E 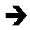 11
4. Then the algorithm traverses one more node and performs concatenation (minimum of the capacity values along the path g.), which results in the final resource pool capacity value 11:
   g. X → I → AFBCDGH → E → Y 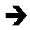 11
5. The iteration stops, as the algorithm has reached the end point Y.

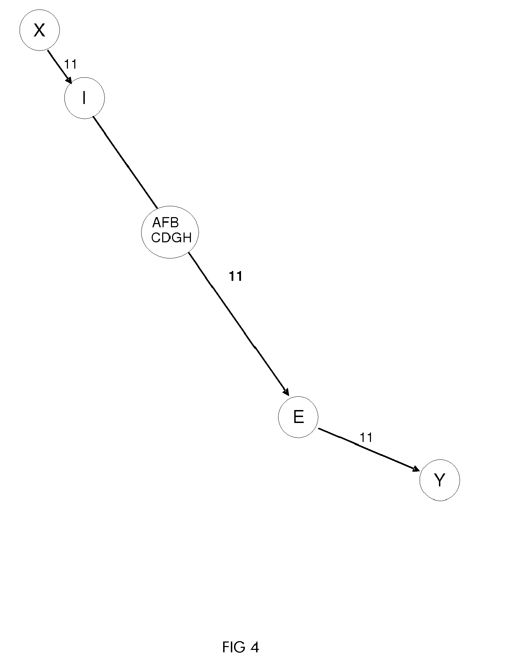

Figure 4 shows the final result of the resource pooling of the network example.

Based on the set or subset of resources the abstracted resource pool information of lower layer resources is determined with the resource pool algorithm and advertised to adjacent (vertical and horizontal) ResourceObjects. This process leads to the abstraction of lower layer resource information to higher network levels. The resource pool information serves as a generic basis for network components in order to apply different methods, e.g. resource allocation, routing decisions etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description merely illustrates the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method of pooling resources and quantifying resource pools of a computer network, wherein each node of the computer network is represented by a vertex of a weighted graph, the method comprising the steps of identifying a plurality of paths from a start vertex to an end vertex, finding a longest common subpath from the start vertex to a split vertex, finding a plurality of independent subpaths from the split vertex to a join vertex, and concatenating the edges traversed by the longest common subpath and each of the independent subpaths.

2. Method as in claim 1 wherein the edges of the independent subpaths are traversed from the split vertex to the join vertex.

3. Method as in claim 1 wherein the edges of the independent subpaths are traversed from the join vertex to the split vertex.

4. Method as in any of the preceding claims further comprising the step of concatenating the edges traversed by each of the independent subpaths and subsequently aggregating the edges traversed by each of the independent subpaths.

5. Method as in claim 4 wherein the step of concatenating the edges comprises calculating the concatenated weight depending on the metric of the edges for each independent subpath.

6. Method as in claim 4 wherein the step of aggregating the edges comprises calculating the aggregated weight of the concatenated weight of the edges for each independent subpath.

7. Method as in any of the preceding claims wherein the paths from the start vertex to the end vertex are identified by means of a multipath routing algorithm.

8. Method as in any of the preceding claims wherein the step of identifying the paths from the start vertex to the end vertex comprises finding an intersection of the sets of paths computed by a plurality of routing algorithms.

9. Method as in any of claims 1 to 7 wherein the step of identifying the paths from the start vertex to the end vertex comprises finding a union of the sets of paths computed by a plurality of routing algorithms.

10. Method as in any of the preceding claims wherein the weight of an edge between a first vertex and a second vertex of the graph is associated with a metric of a communications channel between the node represented by the first vertex and the node represented by the second vertex.

11. Method as in claim 10 wherein the metric is based on at least one of the following: a capacity of the communications channel, a delay imposed by the communications channel, a packet loss of the communications channel, and an energy consumption associated with the communications channel.

12. Method as in claim 10 or 11 comprising the subsequent step of advertising the metric.

13. Method as in any of claims 10 to 12 wherein the nodes and the communications channel form part of a network resource ontology.

14. Method as in any of the preceding claims wherein the longest common subpath and the independent subpaths are found by traversing each of the plurality of paths from the start vertex to the end vertex.

15. Method as in any of the preceding claims wherein the graph takes the form of an acyclic directed graph.
